# EUROPEAN PATENT APPLICATION

(11) **EP 3 361 404 A1**
(43) Date of publication of application: **15.08.2018**
(21) Application number: 17166267.9
(22) Date of filing: 12.04.2017
(51) Int. Cl.: G06F 21/32, H04L 29/06, G06F 21/35, H04W 12/08, G06F 21/88

(54) **AUTHENTICATION DEVICE WITH BIOMETRIC ACTIVATION AND PHYSICAL INTERACTION DEACTIVATION**

(30) Priority: 08.02.2017 US 201715427784
(71) Applicant: All Now Corp, Coral Gables, Florida 33134 (US)
(72) Inventor: XURIGUE BLANCH, Miguel, 08034 Barcelona (ES); GARCIA PARRILLA, Javier, 43005 Tarragona (ES)
(74) Representative: Sugrañes Patentes y Marcas

(57) **Abstract**

The portable device comprises means for obtaining biometric data of a user; means for activating a user profile from the biometric data obtained, enabling access to data associated with the activated user profile; and means for deactivating an activated user profile, disabling access to the data associated with the user profile, which comprise a sensor that upon activation deactivates the activated user profile. The portable device selects and activates a user profile from the different user profiles previously configured from the biometric data of a user, such as a fingerprint, to thus enable access to the data associated with the user profile that can be used by different peripherals forming part of the portable device, such as screens, radio frequency transmitters, light indicators, etc. Access to the data associated with the user profile can be disabled by actuating a sensor that enables the deactivation of the activated user profile.

## Description

### Technical field of the invention

The portable device of the present invention allows interaction with remote devices after their biometric activation.

### Background of the invention

There are known portable devices with biometric activation that store information that can be accessed after biometric activation of the device.

For example, the document US8977569 presents a portable device as an electric wallet to store information corresponding to the user, such as the information of multiple credit cards, the portable device being provided with biometric authentication means, such as a digital fingerprint reader, a retinal scanner or a camera. Nevertheless, this portable device only stores the credit cards of a single user, and it does not include mechanisms that prevent, for example, the fraudulent use of the portable device if it is stolen.

Therefore, an objective of the present invention is to provide a portable device that stores information corresponding to multiple users, which can be authenticated by biometric authentication means and is robust against theft or fraudulent use by other users.

### Description of the invention

The portable device of the present invention is of the type that comprises means for obtaining biometric data of a user; means for activating a user profile from the biometric data obtained, enabling access to data associated with the activated user profile; and means for deactivating an activated user profile, disabling access to the data associated with the user profile, which comprise a sensor that upon activation deactivates the activated user profile. The portable device selects and activates a user profile from the different user profiles previously configured from the biometric data of a user, such as a fingerprint, to thus enable access to the data associated with the user profile that can be used by different peripherals forming part of the portable device, such as screens, radio frequency transmitters, light indicators, etc. Advantageously, access to the data associated with the user profile can be disabled by actuating a sensor, such as a touch sensor arranged on the surface of the device, which upon communicating its actuation to the means for activating user profiles, it enables the deactivation of the activated user profile. This allows the device of the present invention to be configured with multiple user profiles, each one associated with its respective data, which could, in part, be shared among different user profiles, only allowing access to the data corresponding to the user profile that corresponds to that of the user whose biometric data has been obtained. The data associated with the user profiles can be stored in the same memory, the access of which will be enabled or disabled by the means for activating or deactivating a user profile, for example, enabling or disabling reading of the address range of the memory that contains the data of the user profile. Of course, it is also expected that data associated with the user profile can be accessed in other ways, such as through an intermediate data management program that uses a data structure incorporating biometric data and optionally the type of data to be accessed to send back a data structure that contains the data obtained. It is expected that the means for obtaining biometric data of the user may be through a fingerprint sensor that captures the fingerprint of the user, as well as through a camera that captures the facial image of the user, a microphone that captures the voice of the user or any other sensor that obtains data that can categorize the user and possibly associate them with one of the user profiles previously established on the device. It is expected that the data associated with the user profiles may be, for example, credentials to access other remote devices that can be controlled by instructions sent, preferably, by radio frequency via the portable device, such as household appliances, locks, vehicles, etc., thus allowing the user to control from a distance said remote devices after activating the corresponding user profile. Of course, for each remote device, the portable device should have its remote device type configured, and therefore, the actions that the user can carry out with said remote device by means of the portable device. For example, several remote household devices will let the user determine the action to be carried out, for example, if the remote device is a television, whether to change the channel or change the volume through peripherals of the portable device, such as a touch screen. It is also expected that the action will be carried out automatically, so that after activation of the user profile, the device periodically sends radio signals that open the previously configured electronic locks. This way, it is possible that the device of the present invention incorporates data related to different user profiles, with their respective credentials, in such a way that only when a user associated with a user profile uses the device will they have access to control the remote devices that are only associated with their user profile. Of course, although the data associated with the activated user profile is preferably stored inside the device, it is also expected that it is stored in an external database, accessible through radio frequency.

According to a variant embodiment, the sensor has a touchpad, such that when the device is held or manipulated by the hand, the activated user profile is advantageously deactivated, thus preventing another user who takes the device from having access to the data associated with the user profile of the first user after the first user activated the user profile. Of course, if the first user who previously activated the user profile takes the device, they would also proceed to deactivate the user profile, although in this case, this first user would only have to reactivate their user profile by providing their biometric data, such as a fingerprint. It is expected that when the means for obtaining biometric data is a fingerprint sensor, it is located on the surface of the device, preferably in a location that coincides with the position of the user's thumb when they normally grip the device, thus facilitating the reactivation of the user profile of this first user after actuating the touch sensor and deactivating the user profile.

According to a variant embodiment, the sensor is arranged on the surface of the device, favoring contact with the sensor when taking the device and thus preventing another user from having access to the data of the user profile of the previous user.

According to a variant embodiment, the sensor comprises a conductive sheet that favors contact between the fingers of the user and the sensor when the user takes the device.

According to a variant embodiment, the conductive sheet comprises graphene, allowing the sheet to be thin and not form bumps on the surface of the device. The conductive sheet could be made from graphene or just comprise graphene, for example a film or film portion of graphene placed on a polymeric substrate, or a substrate of any other material.

According to a variant embodiment, each user profile includes previously obtained biometric data patterns of one or several users that are associated with a user profile, advantageously allowing the biometric data obtained by the means for obtaining biometric data to be associated with the biometric data patterns in order to thus determine whether a user profile should be activated, allowing access to the data associated with said user profile.

According to a variant embodiment, the means for deactivating an activated user profile are disabled while the means for obtaining biometric data of a user are actuated, preventing a user profile from being activated and deactivated simultaneously, and allowing the user to be identified.

According to a variant embodiment, the device further comprises means for disabling during a predetermined time the means for deactivating a user profile after activating a user profile, allowing the user to interact with the device, during this predetermined time after activation of a user profile, without the user profile being deactivated, accessing, for example, menus via device peripherals, such as buttons or a touch screen or even via a camera or microphone, responding to gestures or voice commands. This way, the user is able to manipulate the device for a predetermined time.

According to a variant embodiment, the device further comprises alert means that are activated during a predetermined time, during which the means for deactivating a user profile are disabled, allowing the user to know the time when they can manipulate the device without deactivating the previously activated user profile. It is expected that said alert means can be a visual, such as a light indicator, a meter that is displayed on the screen, a sound indicator, or any other alert means that allow the user to determine that the means for deactivating a user profile are disabled.

According to a variant embodiment, the device further comprises means for emitting radio frequencies, the means for emitting radio frequencies being adapted to emit a signal based on the data associated with the activated user profile to control a remote device. Of course, it is expected that the radio frequency means transmit signals based on the data associated with the activated user profile using instructions from the user, such as the control of household appliances, as well as in an automatic way, such as the automatic opening of locks.

According to a variant embodiment, the device further comprises a screen, the screen being adapted to display images contained in the data associated with the activated user profile. Such data can be, for example, an identity document of the user. Of course, it is expected that the device can have more than one screen, for example, a screen on its front side and a screen on its back side, which display the front and back sides of an identity document. It is also expected that these images can be, for example, transportation tickets, such as train or plane tickets, or images corresponding to credit cards. It is expected that after activating the user profile the device allows for the selection of the image to be displayed by means of a menu. This image can also correspond to a control interface of a remote device, such as a household appliance, in such a way that, given the touch screen, the user can interact with the remote device. Preferably, the screen would be an energy-efficient screen, such as an electronic ink screen, although it is also expected that the screen can be of another type, such as an OLED screen or others.

According to a variant embodiment, the device further comprises means for capturing energy, which power the device or charge its batteries. Naturally, it is expected that the device has some means of energy storage, such as a battery. It is expected that this battery can be charged in a known way by connecting the device to a source of electrical energy, for example, by means of a connector, such as a USB connector. It is also expected that the battery can be charged by induction, being able to use both the antenna of the means for emitting radio frequencies as well as an inductor for that purpose. It is also expected that the means for capturing energy are means for converting energy, such as solar panels that generate electrical energy from light or means of converting kinetic energy into electrical energy.

According to a variant embodiment, the screen has a touchpad, allowing the user to interact with the information that is displayed on the screen, such as menus or control interfaces, which thus allow it to have buttons, dials and other controls on the screen through which the user can control both the portable device as well as the remote devices.

According to a variant embodiment, the means for obtaining biometric data of a user comprise a fingerprint sensor, means for capturing the image or a microphone, thus allowing biometric data to be obtained that will be compared to previously stored biometric data in order to determine whether they correspond to a user profile.

According to a variant embodiment, when the device comprises a touch screen, the means for obtaining biometric data is the touch screen, allowing the information to be displayed and the instructions to be introduced through that peripheral.

According to a variant embodiment, the device further comprises means for updating the user profiles and their associated information, thus incorporating, eliminating and modifying user profiles, users associated to said user profiles and information related to the remote devices that could be controlled, such as their credentials. These means for updating allow for, after connecting the device to a base, for example, by means of electrical contact terminals that allow coupling between the device and the base, the update of the user profiles and their associated data. Said base can be connected to a computer or other device through which, by means of a suitable program, it manages the user profiles and the associated data that will be loaded onto the device, for example, by means of a series connection established between the base and the device through the electrical contact terminals.

According to a variant embodiment, the device has the shape of a card, allowing it to be comfortably transported by the user in their wallet or pocket, also allowing the base to have a slot for the insertion of the card so that it can be updated.

The base of the device according to the invention can be a base device for controlling a pointer such as a mouse, provided with a body with a curved support base that supports the base device on a work surface, determining a support point, said support base being adapted to tilt the base device, maintaining a support point between the support base and the work surface, the base device being provided with means for detecting the tilt of the base device to detect variations in the tilt of the base device that determine increases in the position of the pointer.

The base device can be provided with means for detecting actions to detect actions using the linear acceleration of the device on the work surface, advantageously being able to perform actions, such as clicking, without the need for components serving that purpose, such as buttons. Said means to detect actions can be adapted to detect a first acceleration peak after reaching a predetermined acceleration variation threshold of 0.003G, where 1G=9.81m/s². In this way, it is possible for the noise in linear acceleration to not cause the erroneous detection of an action, since only when said threshold, which can be positive or negative depending on the direction of movement on each one of the axes, is exceeded does it mean that the base device is moving due to a push made by the user, for example, with their hand.

The means for detecting actions of the base device can also be adapted to detect a second acceleration peak when, after having detected the first peak and stored its extreme value of acceleration, linear acceleration reaches 80% of the value of linear acceleration at the end of the first peak, but with the opposite sign. In this way, it is possible to advantageously detect the maximum braking point of the base device, which will correspond to the second peak, from which acceleration will return to zero, and it can be concluded that its velocity, the integral of acceleration, will also be zero, such that after detecting these two peaks, the relevant and previously programmed action can be carried out based on the direction of movement of the base device and even the value of accelerations in the first and second peak. Thus, for example, different actions can be carried out in the same direction based on the values reached in the first and second peak.

The support base of the base device can have a spheroidal shape or a spherical shape, being, for example, a cap, such as a spherical cap or a spheroidal cap, that allows tilting the base device in any direction.

It is envisaged that the support base of the base device covers the entire perimeter of the base device, thus preventing the existence of edges between the support base and the rest of the body, providing the base device with a better finish and improved ergonomics.

The base device is expected to comprise a compartment to house the portable device of the present invention, the compartment being provided with means of communication with the accessory device, in such a way that the data stored in the base device can be transmitted to the portable device, for example, to control the remote devices which can be controlled by means of the base device through the portable device, which can be a card with a long-lasting battery, in such a way that it can be a portable device. The compartment further comprises means for charging the accessory device, which both charge the battery as well as transfer the information of the remote devices that can control the device.

The base device can also be provided with means for obtaining biometric data, such a fingerprint sensor, and the biometric data obtained is transferred to the accessory device through the means of communication. Of course, it is expected that the accessory portable device also has means for obtaining biometric data, such as a fingerprint sensor, which identify the user so that they can then securely access their data and control the remote devices for which access has been previously configured.

The base device can also comprise processing means to calculate increases in the position of the pointer by using the tilt of the device, in such a way that an increase in the two-dimensional coordinates can be directly transferred, like a conventional mouse. Of course, it is also expected that the tilt of the base device can be transferred directly, which can be advantageous for applications that need a tilt value.

The base device preferably comprises an accelerometer that provides accelerations on each one of the Cartesian axes. It is also expected that the accelerometer can be substituted or supplemented by other components, such as inclinometers or gyroscopes.

The base device further comprises wireless means of communication that allow it to remotely communicate with remote devices, such as a screen.

The body of the base device can be also provided with a screen, through which the user can receive information about the remote devices that they can control.

The body of the base device can also be provided with a face, preferably flat, opposite to the support base upon which the hand of the user will be preferably placed, and which will preferably have a screen.

It is also made known that the base device can further comprise a microphone and a speaker through which instructions can be emitted and the user can send additional voice commands. The base device can further comprise a camera.

### Brief description of the drawings

As a complement to the description provided herein, and for the purpose of helping to make the characteristics of the invention more readily understandable, the present specification is accompanied by a set of drawings constituting an integral part of the same, which, by way of illustration and not limitation, represent the following:
Figures 1 a and 1 b show a front and back view of a variant of the device of the present invention;
Figure 2 shows an operating diagram of the device of the present invention;
Figure 3 shows another variant of the device of the present invention;
Figures 4a, 4b, 4c and 4d show another variant embodiment of the device;
Figure 5 shows a base device with the device of the present invention; and
Figures 6a to 6c show views of another base device with the device of the present invention.

### Detailed description of the drawings

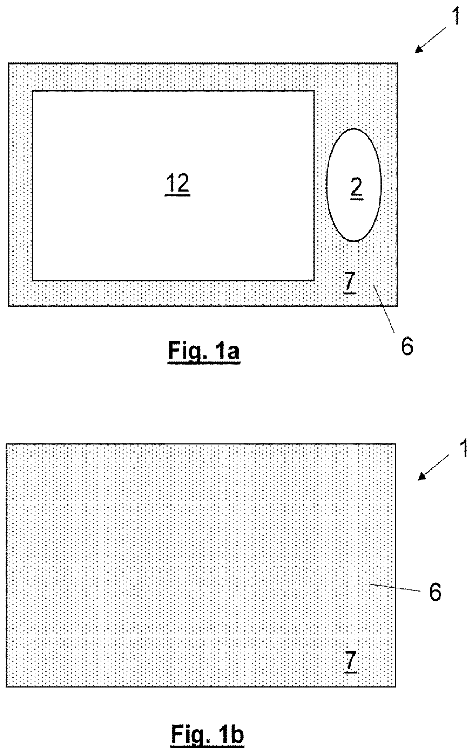

Figures 1 a and 1 b show a first variant embodiment of the portable device 1 of the present invention in the shape of a card, with Figure 1a showing its front side and Figure 1b showing its back side. As can be observed, the device 1 has means for obtaining biometric data 2 of a user, specifically, a fingerprint sensor.

As detailed below, the device 1 further envisages means for activating 3 a user profile 4a, 4b, 4c using the biometric data obtained, enabling access to data 5a, 5b, 5c associated with the activated user profile. The means will be formed by suitably programmed sets of processors and memories. The device 1 further comprises a screen 12, preferably with a touchpad, adapted to display images contained in the data 5a, 5b, 5c associated with the activated user profile 4a, 4b, 4c.

As shown in Figure 1a, the device 1 is further provided with means for deactivating 6 an activated user profile, disabling access to data associated with the user profile, which comprise a sensor 7 that, upon activation, deactivates the activated user profile. In the variant shown in Figures 1 a and 1b, this sensor 7 has a touchpad; specifically, it is made up of a conductive sheet of graphene arranged on the surface of the device, which occupies both the front side and the back side of the device 1. The conductive sheet could be made of graphene or just comprise graphene, for example the conductive sheet could be a polymeric substrate, or any other material, comprising a film or film portion of graphene

Internally, the device 1 also has an antenna that forms part of the means for emitting radio frequencies 11, the means for emitting radio frequencies being adapted to emit a signal based on the data 5a, 5b, 5c associated with the activated user profile 4a, 4b, 4c. Internally, the device 1 further comprises means for capturing energy to charge the battery of the device 1 and thus extend its life. These means for capturing energy comprise means for converting energy, such as means for converting kinetic energy into electrical energy.

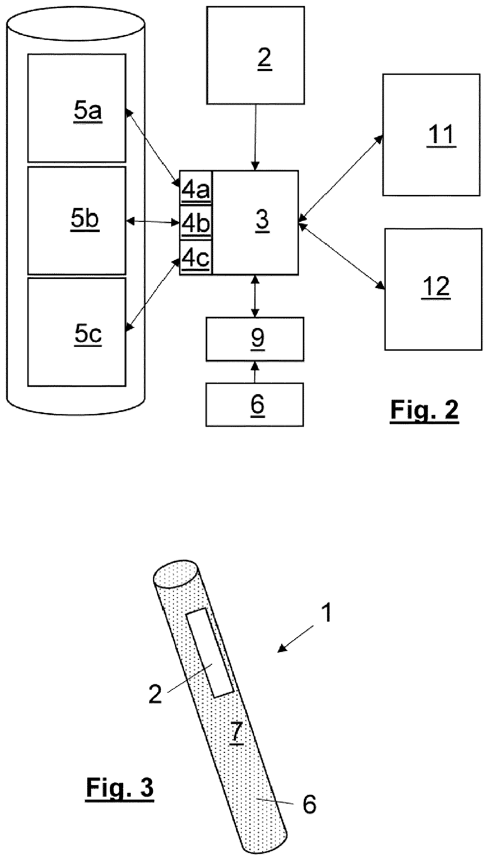

Figure 2 shows an operating diagram of the device 1 of the present invention, specifically, as can be observed in the diagram, the device 1 comprises a registry of user profiles 4a, 4b, 4c, in which each user profile 4a, 4b, 4c includes the previously obtained biometric data patterns of one or several users, such that after obtaining the biometric data of a user, the device 1 allows activation of a user profile through the means for activating 3 a user profile 4a, 4b, 4c and thus enabling access to the data 5a, 5b, 5c associated with the activated user profile. In this way, access to said data is enabled by the different peripherals of the device 1, such as the screen 12 or the means for emitting radio frequencies 11.

Advantageously, to prevent the data 5a, 5b, 5c of an activated user profile from being accessed by another user, the device 1 has means for deactivating 6 an activated user profile 4a, 4b, 4c, disabling access to the data 5a, 5b, 5c associated with the user profile 4a, 4b, 4c. These means for deactivating 6 an activated user profile 4a, 4b, 4c are actuated by means of the sensor 7, which, upon activation, deactivates the activated user profile 4a, 4b, 4c.

In this way, the device 1 advantageously stores of a set of biometric data and controllable remote devices by means of users associated to the user profiles 4a, 4b, 4c, such that, in function of the user who activates the device 1, there is access to determined remote devices. In this way, great granularity is achieved in relation to the different user permissions, since by using the same device 1, two different users associated to different user profiles 4a, 4b, 4c will have access to different sets of remote devices and possibly to different access levels.

It is envisaged that these remote devices, devices at a certain distance from the user or those in which the user does not have physical access to their controls, can be household appliances or even automobiles, doors provided with electronic locks, lighting systems, multimedia systems, automation systems, machinery, instruments, etc.

As can be observed in Figure 2, it is also expected that the device 1 is provided with means for deactivating 6 an activated user profile, disabling access to the data associated with a user profile; however, the means for deactivating 6 an activated user profile 4a, 4b, 4c are disabled while the means for obtaining biometric data 2 of a user are actuated. Furthermore, it is expected that the device 1 has means for disabling 6 during a predetermined time the means for deactivating 6 a user profile 4a, 4b, 4c after activating a user profile. Optionally, the device 1 can further be provided with alert means 10 that are activated during a predetermined time, during which the means for deactivating 6 a user profile 4a, 4b, 4c are disabled.

It is expected that the device 1 of the present invention stores user profiles 4a, 4b, 4c and data sets 5a, 5b, 5c, the user profiles 4a, 4b, 4c being associated with the data 5a, 5b, 5c, such that, by having the device 1 loaded with all this data, the device 1 can be used by different users, so that if they have been previously associated with some of the user profiles 4a, 4b, 4c, they will allow the device 1 to access the data 5a, 5b, 5c associated with the user profiles 4a, 4b, 4c. In the scope of the invention, reference is made to user profiles 4a, 4b, 4c instead of simply a user, since it is expected that various users can be associated with the same user profile, which could also be considered as a user group.

Figure 3 shows an alternative variant embodiment of the device 1 which does not have the shape of a card, but rather a cylinder, which can be a pen that can be carried, for example, in the pocket of a shirt without having to touch it after activating the user profile 4a, 4b, 4c.

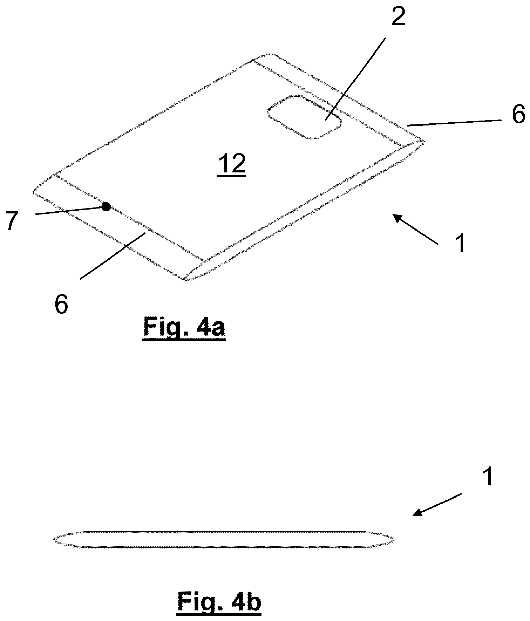

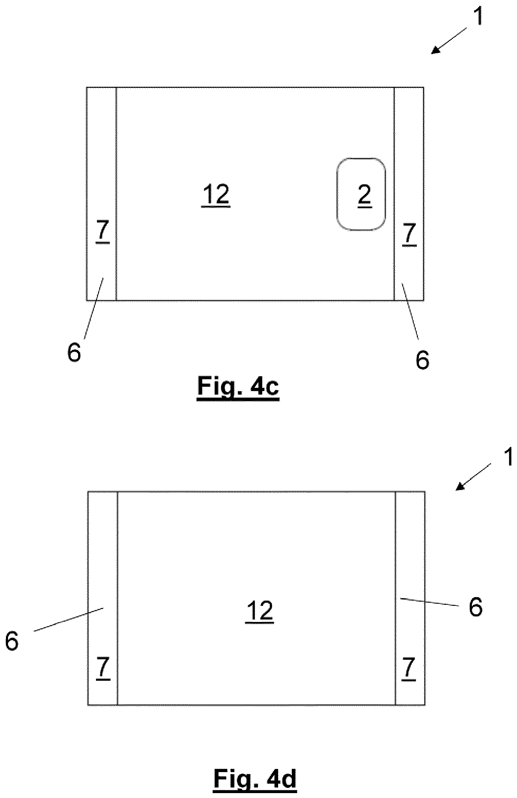

Figures 4a to 4d show another variant embodiment of the device 1, which shows a screen 12 on its front side and a screen 12 on its back side, these screens being preferably touch screens, the sensor 7 having a touchpad, which is also made up of a conductive sheet of graphene, arranged on the edges of the surface of the device, both on its front side as well as its back side. In said variant embodiment, it is worth noting that the means for obtaining biometric data 2 are integrated on the touch screen 12, such that an area of the screen 12 is ready to function as a fingerprint reader.

It is also expected that the presented devices 1 have means for updating the user profiles 4a, 4b, 4c and their associated data 5a, 5b, 5c, which can be provided with electrical contact terminals, to connect them to a base that updates the user profiles 4a, 4b, 4c and their associated data 5a, 5b, 5c, as well as to charge the battery of device 1.

As shown in Figures 4a to 4d, it is expected that the device 1 can have the shape of a card, such as a credit card that allows the device 1 to be carried in the pocket or bag, and is provided with biometric detection means 2, a touch screen 12 which can have integrated biometric detection means 2 and a wireless communication system. This wireless communication system can be made up of means for emitting radio frequencies 11 that can also be adapted to receive radio frequencies, said means for emitting radio frequencies 11 allowing, for example, the device 1 to be used as a RFID key when the user profile 4a, 4b, 4c allows access to data 5a, 5b, 5c in which a door opening code is stored, which should be communicated appropriately. It is expected that the touch screen 12 displays, after the activation of a user profile 4a, 4b, 4c, a touch menu with the actions that the device 1 lets the user carry out, in function of the data 5a, 5b, 5c associated with the activated user profile 4a, 4b, 4c.

It is expected that the device 1 can be connected to a base preferably by means of electrical contact terminals. The previously obtained biometric data patterns for each user, for example, fingerprints, iris images, voice signatures, etc. that should allow activation of the user profiles, as well as the different user profiles available and the data associated with each one of the user profiles, will be stored in that base, or in secure storage, such as a computer accessible through the base. Ideally, all this information should be stored in the device 1, such that each previously registered user in the system, upon providing their biometric data to the device 1, shall have access to the data 5a, 5b, 5c associated with the user profile 4a, 4b, 4c that is activated from their biometric data. Nevertheless, since the storage space of the device 1 is limited, it is possible that only some of the user profiles 4a, 4b, 4c, as well as their associated data, are stored in the device 1, for example, the user profiles 4a, 4b, 4c of the users that are expected to use the device 1, where it is expected that these user profiles 4a, 4b, 4c can be modified by connecting the device 1 to the base.

It is expected that some of the same biometric data can be associated with more than one user profile 4a, 4b, 4c, such that the user profile to be activated would be a compound profile formed by various profiles, such that this compound profile would have access to the data 5a, 5b, 5c of each of the user profiles that are activated from the biometric data obtained from the user. However, it is preferable that each user is only associated with one user profile.

The device 1 can also be connected by radio frequency to remote devices in order to actuate them, either manually, with the user actuating the touch screen or giving voice commands, or automatically, with the device 1 emitting signals like a beacon, for example, to open doors or turn on lights when the user approaches a sensor that receives the signal that contains the data 5a, 5b, 5c of a specific user profile.

It is expected that these remote devices can be automobiles, doors, lighting systems, multimedia systems, automation systems, machinery, instruments, etc.

To configure the device 1, it is necessary to previously register in a membership database accessible by the base both the biometric data pattern (fingerprints, for example) that will be associated with a user profile, and the data or features of use of this user profile, which will include the credentials and information of the remote devices with which it could interact.

Once registration is complete and the information in the database has been loaded onto the device 1, for example, by means of the base, in order to activate the card, the user only has to identify himself by providing his biometric data, such as a fingerprint, and the remote devices will appear on the screen, preferably those that are within the radius of action of the device 1, to which he has access. To detect the remote devices in the radius of action of the device 1 to which he has access, it is expected that the device carries out, preferably in a periodic way, operations to detect remote devices, for example, sending out radio broadcasting signals or radio beacons in a protocol previously established between the device 1 and the remote devices, such as DNS-SD.

Some of the actions that the user can carry out with the device 1, which can have the shape of a card, are opening and closing the doors of their house, opening and starting the automobile, adjusting lighting in the room or turning up or down the volume of the stereo or the temperature of the air conditioning without needing to have a remote control or a key for each thing or having to get up to activate switches or dials.

Another interesting particularity of the device 1 is its security, since, by being registered biometrically in the membership database, any device 1 can be used, including devices 1 of different shapes and sizes. The activation of the device 1 will be carried out by the biometric detector and this prevents another person from accessing the data on the device 1 of the user who was initially identified. Furthermore, when a user profile remains still for some time or when it is touched some time after being activated, the device 1 disables the activated user profile, disabling access to the data associated with the user profile by means of the sensor 7 that, upon activation, deactivates the activated user profile. Of course, said sensor can be, among others, a touch sensor or a movement sensor.

By deactivating the activated user profile, access to the data associated with the user profile is disabled, preventing anyone from activating the remote devices that the user of the previous profile had access to without re-identifying himself; and if another user is identified, this user can only access the remote devices associated with his user profile, not those of the previous user.

For example, when woman A gets up, she adjusts the temperature of the air conditioning and before returning, she adjusts the shades of the windows of the room. When she approaches the door of the house, she identifies herself and the door opens. When she leaves and closes the door, it locks when she has moved a few meters away from it. She activates the device 1, which can be a card, to open the garage door and at the same time, the car door opens. She sits down and when she fastens her seat belt, the car engine starts. Upon leaving the garage, the door closes and is blocked. Upon arriving at her workplace, she parks, unfastens her seat belt, turns off the engine and upon leaving and moving away from the automobile, the door is blocked. Upon returning home, her son takes the same card, identifies himself and turns on the television, but he cannot interact with the car nor the sound system.

Advantageously, if the device 1 goes missing, no security issues arise since no one can access the remote devices of the last user of the device 1 if it is not him.

In other scopes of application, the device 1 would be useful in the healthcare sector, where, upon identification of a patient admitted to a hospital, the device 1, such as a card, would display on the screen the medication or treatment prescribed and prevent medication errors. In addition, in companies with this card, access to restricted areas or specific machinery could be limited to employees. In short, it is an effective method for preventing false actions in the assignment of tasks or actions.

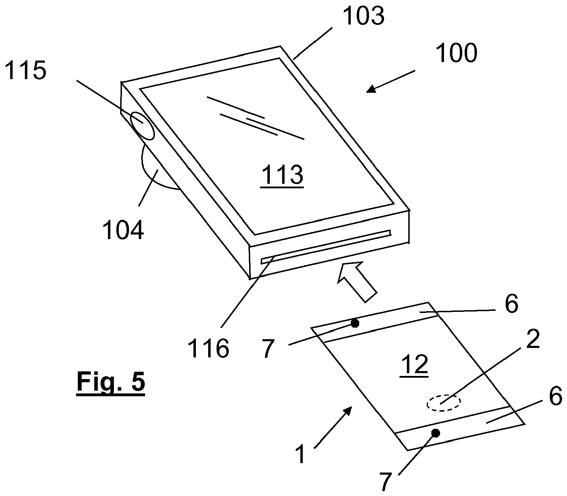

Figure 5 shows a perspective view of a base device 100 for the device 1 of the present invention in the form of a device for controlling a pointer when being tilted and moved, in which the upper face of the base device 100 can be observed, in which it can be observed that the body 2 is provided with a screen 113 on said face 14, which is flat in the variant shown and presents a screen 113, opposite to the support base 104. In Fig. 5, it is also observed that the base device 100 further comprises a compartment 116 to house the device 1, such as a slot for introducing the device 1 shaped as a card, the compartment 116 being provided with means of communication with the device 1, such as electrical contacts. The base device 100 further comprises means for obtaining biometric data 115 in the form of a fingerprint sensor. Thus, the biometric data obtained by the means for obtaining biometric data 115 of the base device 100 can be transferred to the device 1 through the means of communication. It is also expected that the compartment 116 further comprises means for charging the accessory device 117. Optionally, the base device 100 could also comprise a microphone and speaker set, as well as a camera.

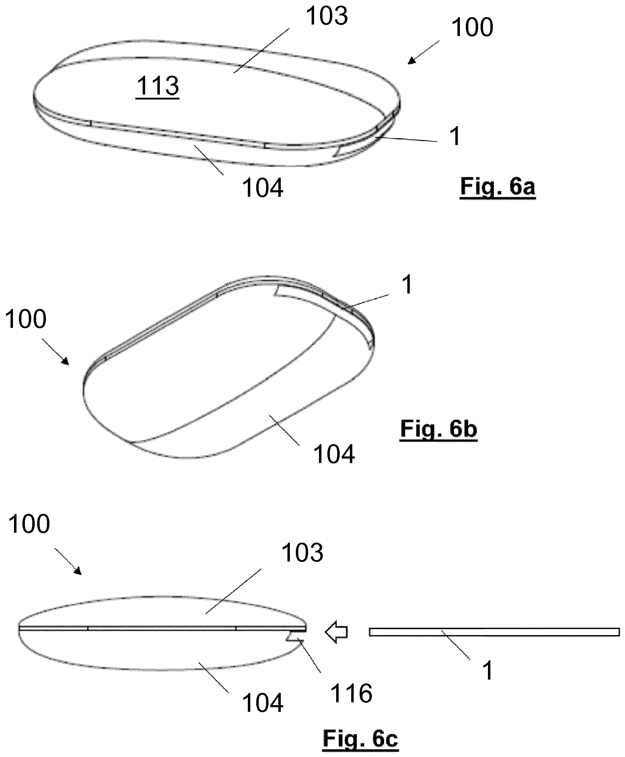

Figures 6a to 6c show another base device 100 for the device 1 of the present invention in which the support base 104 has the shape of a spheroidal cap and covers the entire perimeter of the base device 100. It is expected that in this variant embodiment, although the face 114 opposite to the support base 104 is not flat, it can have a screen 113, for example, a curved screen.The base device 100 can be used as a device for controlling a pointer, such as a mouse, the support base 104 being adapted to tilt the base device 100, maintaining a support point between the support base 104 and a work surface 105, the device being provided with means for detecting tilt 7 that detect variations in the tilt of the base device 100, for example, by reading the accelerations on each one of the axes X, Y and Z provided by an accelerometer. In this way, the base device 100 can determine the increases in the two-dimensional position of a pointer, for example, a pointer on a remote screen. Said increases in the position of the pointer on the screen can be sent by wireless means of communication provided in the base device 100. The wireless means of communication can alternatively or additionally transmit the tilt of the base device 100 to a remote device that changes the tilt of the device and calculates the increases in the position of the pointer in the directions of the screen. The pointer may be a bidimensional pointer. although other types of controls that can be actuated by means of the base device 100. For example, linear as well as two-dimensional dials and other controls of door opening systems, lighting systems, multimedia systems or automation systems, which open or close doors by means of actuating electronic locks, adjust the intensity of light appliances, or change the volume of a stereo, preferably supporting the base device 100 on a work surface.

The base device 100 can also be moved, for example, by pushing it with a hand in any direction, allowing an action to be detected. This action can be, for example, clicking the pointer, although it can be configured to be any other action that is to be carried out by a remote device to which the base device has been connected and is sending information, such as an on/off action, the execution of a specific computer program, a pause when a video is playing, etc. Of course, when the base device 100 detects actions by means for detecting actions, the base device 100 will send this action by radio frequency through the wireless means of communication to the remote device, such as a screen.

The means for detecting actions of the base device 100 can be adapted to detect an action, once the accelerometer is calibrated, after detecting a variation of at least 0.003G, then expect a first acceleration peak and then an acceleration at least 80% of the linear acceleration value of the first peak of the opposite sign, and then a second acceleration peak. Actions in any X, Y and Z axis can be detected.

## Claims

1. A portable device (1) comprising:
- means for obtaining biometric data (2) of a user;
- means for activating (3) a user profile (4a, 4b, 4c) using the biometric data obtained, enabling access to data (5a, 5b, 5c) associated with the activated user profile; and
- means for deactivating (6) an activated user profile, disabling access to the data associated with the user profile, which comprise a sensor (7) that, upon activation, deactivates the activated user profile.

2. The device (1) according to the preceding claim, **characterized in that** the sensor (7) has a touchpad.

3. The device (1) according to any one of the preceding claims, **characterized in that** the sensor (7) is arranged on the surface of the device.

4. The device (1) according to any one of the preceding claims, **characterized in that** the sensor (7) comprises a conductive sheet.

5. The device (1) according to the preceding claim, **characterized in that** the conductive sheet comprises graphene.

6. The device (1) according to any one of the preceding claims, **characterized in that** each user profile (4a, 4b, 4c) includes previously obtained biometric data patterns of one or several users.

7. The device (1) according to any one of the preceding claims, **characterized in that** the means for deactivating (6) an activated user profile (4a,4b,4c) are disabled while the means for obtaining biometric data (2) of a user are actuated.

8. The device (1) according to any one of the preceding claims, **characterized in that** it further comprises means for disabling (9) during a predetermined time the means for deactivating (6) a user profile (4a, 4b, 4c) after activating a user profile.

9. The device (1) according to the preceding claim, **characterized in that** it comprises alert means (10) that are activated during a predetermined time, during which the means for deactivating (6) a user profile (4a, 4b, 4c) are disabled.

10. The device (1) according to any one of the preceding claims, **characterized in that** it further comprises means for emitting radio frequencies (11), the means for emitting radio frequencies being adapted to emit a signal based on the data (5a, 5b, 5c) associated with the activated user profile (4a, 4b, 4c).

11. The device (1) according to any one of the preceding claims, **characterized in that** it further comprises a screen (12), the screen being adapted to display images contained in the data (5a,5b,5c) associated with the activated user profile (4a,4b,4c).

12. The device (1) according to the preceding claim, **characterized in that** the screen (12) is a touch screen.

13. The device (1) according to any one of the preceding claims, **characterized in that** the means for obtaining biometric data (2) of a user comprises a fingerprint sensor, means for capturing the image or a microphone.

14. The device (1) according to any one of the preceding claims, **characterized in that** it further comprises means for updating the user profiles (4a, 4b, 4c) and their associated data (5a, 5b, 5c).

15. The device (1) according to the preceding claim, **characterized in that** the means for updating comprises electrical contact terminals.
